# EUROPEAN PATENT APPLICATION

(11) **EP 3 024 217 A1**
(43) Date of publication of application: **25.05.2016**
(21) Application number: 15155142.1
(22) Date of filing: 13.02.2015
(51) Int. Cl.: H04N 5/232

(54) **Wide view monitoring system and method thereof**

(30) Priority: 21.11.2014 TW 103140489
(71) Applicant: Industrial Technology Research Institute, Chu-Tung, Hsin-Chu (TW)
(72) Inventor: Cheng, Pai-Wei, 110 Taipei City (TW); Chen, Long Tai, 351 Miaoli County (TW); Liu, Shao-Meng, 310 Hsinchu County (TW); Yeh, Yung-Yi, 312 Hsinchu County (TW)
(74) Representative: Lang, Christian

(57) **Abstract**

A wide view monitoring system has: a first image capturing module; a second image capturing module; a third image capturing module; an image module signal connected to the first image capturing module, the second image capturing module and the third image capturing module; and a display module; wherein, the first image capturing module generates a first image information; the second image capturing module generates a second image information; the third image capturing module generates a third image information; the first image information, the second image information and the third image information are cut and assembled by the image module; the assembled of the first image information, the second image information and the third image information are displayed by the display module.

## Description

### CROSS REFERENCE TO RELATED APPLICATION

This application also claims priority to Taiwan Patent Application No. 103140489 filed in the Taiwan Patent Office on November 21, 2014, the entire content of which is incorporated herein by reference.

### TECHNICAL FIELD

The present disclosure relates to a wide view monitoring system and method thereof, and more particularly, to a system and method for trimming and stitching a plurality of images into a wide-view image without distortion.

### BACKGROUND

Nowadays, we are used to have streets and roads that are crammed with vehicles of all variety, including wheel vehicles, track vehicles or even armour vehicles. Consequently, traffic accident is inevitable, and thus there can be a portion of drivers consciously having a kind of pre-warning system mounted on their vehicles for helping the drivers to avoid traffic accidents.

There are two types of pre-warning systems that are currently available on the market, which are the acoustic detection type of pre-warning systems and the visual detection type of pre-warning systems. For the acoustic detection type of pre-warning systems, the distance between a host vehicle and another vehicle in front of the host vehicle is measured by the use of an ultrasonic wave, and in a condition when the distance is smaller than a predefined safe distance, the pre-warning system on the host vehicle is enabled to issue an alert signal for reminding the driver. On the other hand, for the visual detection type of pre-warning system, the distance between the host vehicle and the front vehicle is determined measured by the use of an image, whereas the image is captured by an image capturing unit of the pre-warning system that is mounted on the host vehicle.

Nevertheless, despite that the aforesaid pre-warning system can remind a driver to avoid a dangerous driving hazard, its effectiveness is restricted by its limited detection range and angle. That is, the distance between the host vehicle and the front vehicle can only be detected and measured when the front vehicle is moving within a specific detection range and angle of the pre-warning system, and if there is a vehicle or even an object outside the detection range and angle, it will not be detected and thus there is still a possible for traffic accident to occur even when the prior pre-warning system is operating normally.

Although there are a portion of the conventional pre-warning systems that adopt an image capturing unit with wide-angle lens for allowing more scene to be included in the captured image, such wide-angle image is distorted that not only can cause a drive to make an erroneous driving decision, but also might cause a felling of dizziness to the driver viewing the image as the wide-angle image is proportional distorted.

### SUMMARY

The present disclosure provides a wide view monitoring system, which comprises:
a first image capturing module;
a second image capturing module;
a third image capturing module;
an image module, signal connected to the first image capturing module, the second image capturing module and the third image capturing module; and
a display module;
wherein, the first image capturing module generates a first image information; the second image capturing module generates a second image information; the third image capturing module generates a third image information; the first image information, the second image information and the third image information are trim and assembled by the image module; the assembled of the first image information, the second image information and the third image information are displayed by the display module.

The present disclosure provide a wide view monitoring method, which comprises the steps of:
providing a first image information, a second image information, and a third image information;
detecting edges of the first image information, the second image information and the third image information, and then further detecting an overlapping region between the first image information and the second image information, and also detecting another overlapping region between the second image information and the third image information;
obtaining a characteristic value according to the overlapping regions;
performing a trimming/assembling operation upon the first image information, the second image information and the third image information according to the overlapping regions and the characteristic value; and
using a display module to display the assembled of the first image information, the second image information and the third image information.

Further scope of applicability of the present application will become more apparent from the detailed description given hereinafter. However, it should be understood that the detailed description and specific examples, while indicating exemplary embodiments of the disclosure, are given by way of illustration only, since various changes and modifications within the spirit and scope of the disclosure will become apparent to those skilled in the art from this detailed description.

### BRIEF DESCRIPTION OF THE DRAWINGS

The present disclosure will become more fully understood from the detailed description given herein below and the accompanying drawings which are given by way of illustration only, and thus are not limitative of the present disclosure and wherein:
FIG. 1 is a schematic diagram showing a wide view monitoring system according to a first embodiment of the present disclosure.
FIG. 2 is a schematic view of an image module used in the present disclosure.
FIG. 3 is a schematic diagram showing a wide view monitoring system according to a second embodiment of the present disclosure.
FIG. 4 is a flow chart showing steps performing in a wide view monitoring method of the present disclosure.

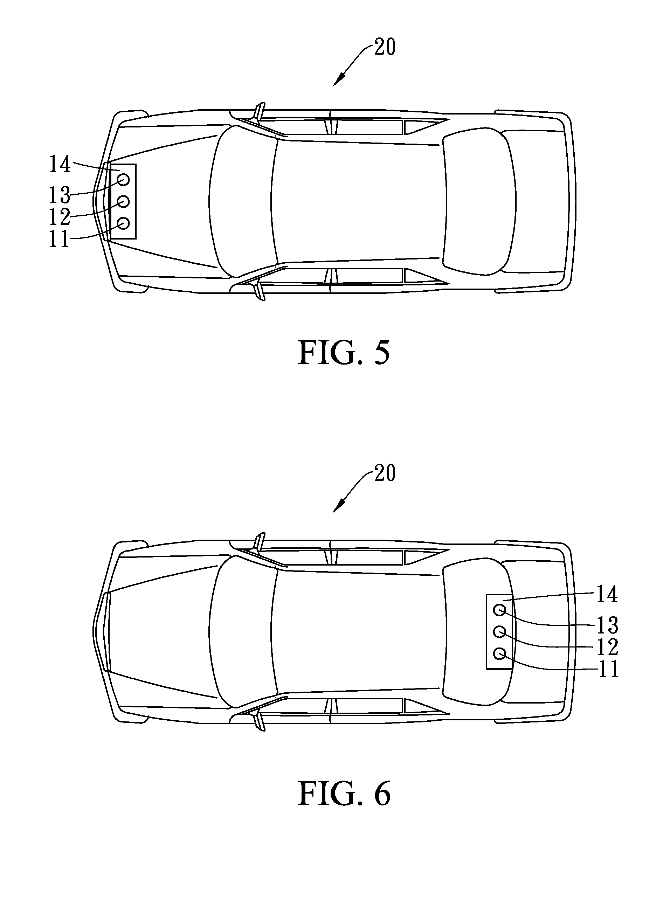

FIG. 5 is a schematic diagram showing a first image capturing module, a second image capturing module and a third image capturing module that are mounted on the front of a vehicle frame.
FIG. 6 is a schematic diagram showing a first image capturing module, a second image capturing module and a third image capturing module that are mounted on the rear of a vehicle frame.

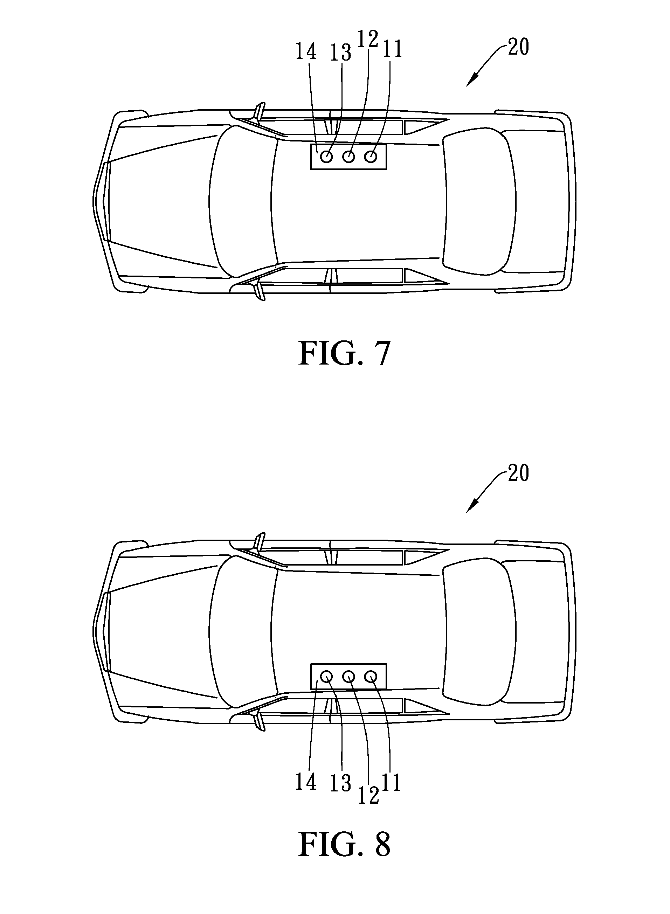

FIG. 7 is a schematic diagram showing a first image capturing module, a second image capturing module and a third image capturing module that are mounted on the right side of a vehicle frame.
FIG. 8 is a schematic diagram showing a first image capturing module, a second image capturing module and a third image capturing module that are mounted on the left side of a vehicle frame.

### DETAILED DESCRIPTION

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

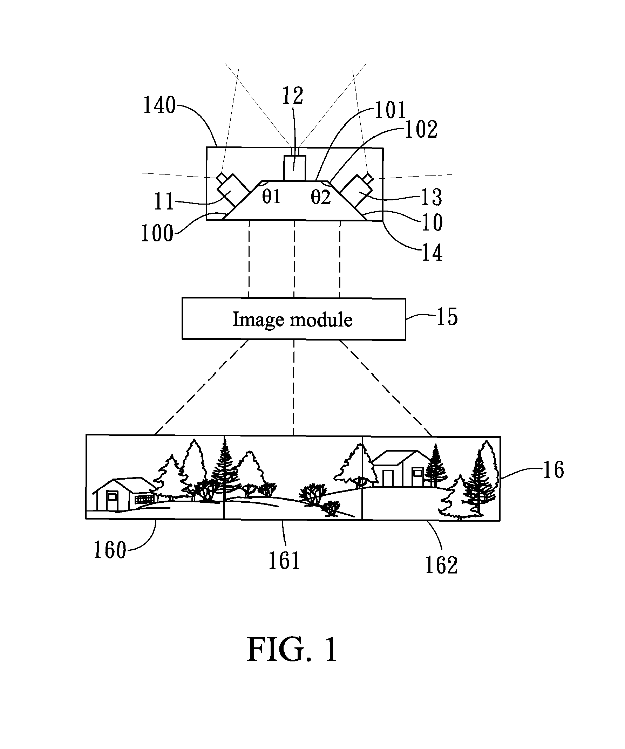

Please refer to FIG. 1 is a schematic diagram showing a wide view monitoring system according to a first embodiment of the present disclosure. In this first embodiment, a wide view monitoring system is disclosed, which comprises: a supporting rack 10, a first image capturing module 11, a second image capturing module 12, a third image capturing module 13, a protective shield 14, an image module 15, and a display module 16.

The supporting rack 10 is formed with a first setting position 100, a second setting position 101, a third setting position 102, a first bending angle *θ*1 and a second bending angle *θ*2 in a manner that the first bending angle *θ*1 is formed at a position between the first setting position 100 and the second setting position 101 for enabling the first setting position 100 to incline or bend from the second setting position 101; the second bending angle *θ*2 is formed at a position between the third setting position 102 and the second setting position 101 for enabling the third setting position 102 to incline or bend from the second setting position 101. In addition, each of the first bending angle *θ*1 and the second bending angle *θ*2 is an angle ranged between 35 degrees to 48 degrees.

Moreover, the first image capturing module 11 is disposed at the first setting position 100; the second image capturing module 12 is disposed at the second setting position 101; and the third image capturing module 13 is disposed at the third setting position 102.

The protective shield 14 is disposed covering the supporting rack 10, the first image capturing module 11, the second image capturing module 12 and the third image capturing module 13; and also the protective shield 14 is formed with a window 140, through that the first image capturing module 11, the second image capturing module 12 and the third image capturing module 13 are enabled to capture images.

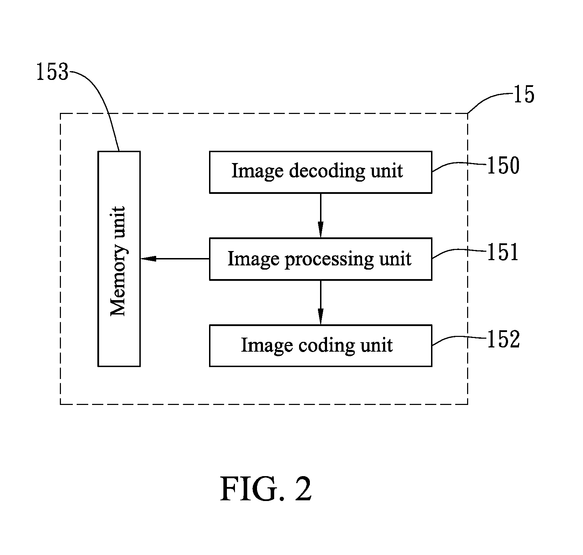

Please refer to FIG. 2, which is a schematic view of an image module used in the present disclosure. In FIG. 2, the image module 15 that is signal connected to the first image capturing module 11, the second image capturing module 12 and the third image capturing module 13, is composed of: an image decoding unit 150, an image processing unit 151, an image coding unit 152 and a memory unit 153.

The image decoding unit 150 is enabled to receive the first image information, the second image information and the third image information respectively from the first image capturing module 11, the second image capturing module 12 and the third image capturing module 13 while coding the received first image information, the second image information and the third image information respectively into a video data; and also the image decoding unit 150 is used for detecting edges of the first image information, the second image information and the third image information, and then further detecting an overlapping region between the first image information and the second image information, while also detecting another overlapping region between the second image information and the third image information so as to be used for obtaining a characteristic value of the first image information, a characteristic value of the second image information and a characteristic value of the third image information. Thereafter, according to the characteristic values and the overlapping regions, the image decoding unit 150 is enabled to perform a trimming/assembling operation upon the first image information, the second image information and the third image information for obtaining an assembled image information to be used for generating an outcome equation.

The image processing unit 151 is used for performing a coding operation upon the first image information, the second image information and the third image information basing on the outcome equation.

The memory unit 153 is used for storing the coded of the first image information, the second image information and the third image information

The image coding unit 152 is used for performing a compress operation upon the coded of the first image information, the second image information and the third image information.

The display module 16 that is signal connected to the image module 15 is composed of: a first display unit 160, a second display unit 161 and a third display unit 162.

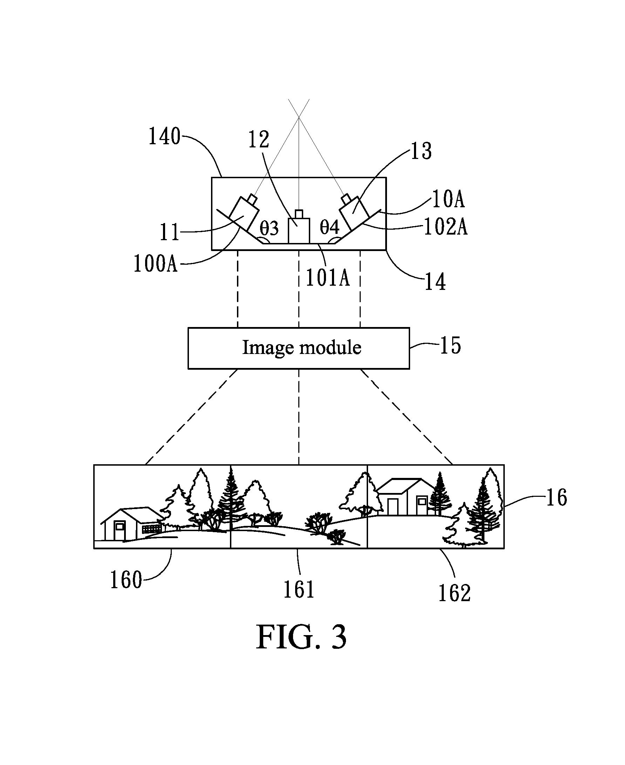

Please refer to FIG. 3, which is a schematic diagram showing a wide view monitoring system according to a second embodiment of the present disclosure. In this second embodiment, a first image capturing module 11, a second image capturing module 12, a third image capturing module 13, a protective shield 14, an image module 15, and a display module 16 are components that are the same as those disclosed in the first embodiment.

The difference between the first and the second embodiments is that: in the second embodiment, the supporting rack 10A is formed with a first setting position 100A, a second setting position 101A, a third setting position 102A, a first bending angle *θ*3 and a second bending angle *θ*4 in a manner that the first bending angle *θ*3 is formed at a position between the first setting position 100A and the second setting position 101A for enabling the first setting position 100A to bend from the second setting position 101A; the second bending angle *θ*4 is formed at a position between the third setting position 102A and the second setting position 101A for enabling the third setting position 102A to bend from the second setting position 101A. In addition, each of the first bending angle *θ*3 and the second bending angle *θ*4 is an angle ranged between 35 degrees to 48 degrees.

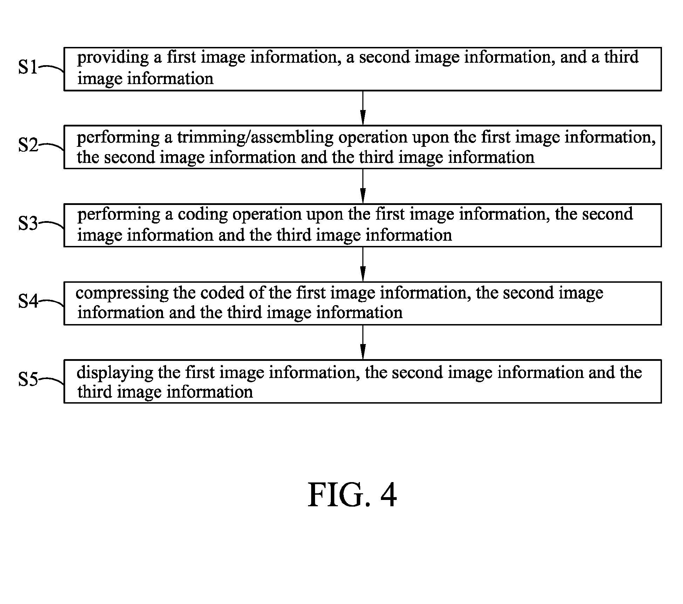

Please refer to FIG. 4, which is a flow chart showing steps performing in a wide view monitoring method of the present disclosure. In FIG. 4, the wide view monitoring method comprises the steps of:
S1 providing a first image information, a second image information, and a third image information; whereas there are a first image capturing module 11, a second image capturing module 12 and a third image capturing module that are mounted at positions in front, at the rear, at the left side or at the right side of a vehicle 20 according to actual requirements, so as to the used for capturing images in the viewing areas of the first, the second and the third image capturing modules, while transmitting the captured images to the image module 14, and also respectively generating a first image information, a second image information and a third image information according to their respective captured images;
S2 performing a trimming/assembling operation upon the first image information, the second image information and the third image information; in which an image decoding unit 150 is provided for receiving the first image information from the first image capturing module 11, the second image information from the second image capturing module 12, and the third image information from the third image capturing module 13, while decoding the received image information respectively into a video data as the first image information, the second image information and the third image information are compressed; and also the image decoding unit 150 is used for detecting edges of the first image information, the second image information and the third image information, and then further detecting an overlapping region between the first image information and the second image information, while also detecting another overlapping region between the second image information and the third image information so as to be used for obtaining a characteristic value of the first image information, a characteristic value of the second image information and a characteristic value of the third image information; and thereafter, the image decoding unit 150 is enabled to determine whether or not to perform an optimization operation upon the first image information, the second image information and the third image information for determining whether or not to adjust the image quality and file size of the first image information, the second image information and the third image information; and then according to the characteristic values and the overlapping regions, the image decoding unit 150 is enabled to perform a trimming/assembling operation upon the first image information, the second image information and the third image information for obtaining an assembled image information to be used for generating an outcome equation;
S3 performing a coding operation upon the first image information, the second image information and the third image information; in which an image processing unit is provided for receiving the outcome equation to be used in a coding operation performed upon the first image information, the second image information and the third image information; and after the coding operation, a memory unit is used for storing the coded first image information, the coded second image information and the coded third image information;
S4 compressing the coded of the first image information, the second image information and the third image information; in which an image coding unit 152 is provided for receiving the coded first image information, the coded second image information and the coded third image information so as to be used in a compress operation; and
S5 displaying the first image information, the second image information and the third image information; in which the compressed first image information, the compressed second image information and the compressed third image information are transmitted respectively to the first displaying unit 160, the second displaying unit 161 and the third displaying unit 162 for displaying.

To sum up, by the present disclosure, images capturing from multiple image capturing modules, such as the first image information from the first image capturing module 11, the second image information from the second image capturing module 12, and the third image information from the third image capturing module 13, are trimmed and assembled into an assembled image while enabling the assembled image to be transmitted to the display module 16 for displaying a wide-view image without any distortion, by that a driver using the wide view monitoring system of the present disclosure is able to detect a traffic hazard accurately and effectively for prevent traffic accident from happening.

With respect to the above description then, it is to be realized that the optimum dimensional relationships for the parts of the disclosure, to include variations in size, materials, shape, form, function and manner of operation, assembly and use, are deemed readily apparent and obvious to one skilled in the art, and all equivalent relationships to those illustrated in the drawings and described in the specification are intended to be encompassed by the present disclosure.

## Claims

1. A wide view monitoring system, comprising:
a first image capturing module;
a second image capturing module;
a third image capturing module;
an image module, signal connected to the first image capturing module, the second image capturing module and the third image capturing module; and a display module;
wherein, the first image capturing module generates a first image information; the second image capturing module generates a second image information; the third image capturing module generates a third image information; the first image information, the second image information and the third image information are trim and assembled by the image module; the assembled of the first image information, the second image information and the third image information are displayed by the display module.

2. The wide view monitoring system of claim 1, further comprising:
a supporting rack, formed with a first setting position, a second setting position, a third setting position, a first bending angle and a second bending angle in a manner that the first bending angle is formed at a position between the first setting position and the second setting position for enabling the first setting position to incline or bend from the second setting position; the second bending angle is formed at a position between the third setting position and the second setting position for enabling the third setting position to incline or bend from the second setting position; the first image capturing module is disposed at the first setting position; the second image capturing module is disposed at the second setting position; and the third image capturing module is disposed at the third setting position.

3. The wide view monitoring system of claim 2, further comprising:
a protective shield, formed with a window while being disposed covering the supporting rack, the first image capturing module, the second image capturing module and the third image capturing module.

4. The wide view monitoring system of claim 2, wherein each of the first bending angle and the second bending angle is an angle ranged between 35 degrees to 48 degrees.

5. The wide view monitoring system of claim 1, wherein the display module further comprises:
a first displaying unit, for displaying the first image information;
a second displaying unit, for displaying the second image information; and
a third displaying unit, for displaying the third image information.

6. The wide view monitoring system of claim 1, wherein the image module further comprises:
an image decoding unit, for detecting edges of the first image information, the second image information and the third image information, and then further detecting an overlapping region between the first image information and the second image information, while also detecting another overlapping region between the second image information and the third image information so as to be used for obtaining a characteristic value, and thereafter, according to the characteristic value and the overlapping regions, enabling the image decoding unit to perform a trimming/assembling operation upon the first image information, the second image information and the third image information for obtaining an assembled image information to be used for generating an outcome equation;
an image processing unit, for performing a coding operation upon the first image information, the second image information and the third image information basing on the outcome equation; and
an image coding unit, for performing a compress operation upon the coded of the first image information, the second image information and the third image information.

7. The wide view monitoring system of claim 6, wherein the image module further comprises:
a memory unit, for storing the coded of the first image information, the second image information and the third image information.

8. A wide view monitoring method, comprising the steps of:
providing a first image information, a second image information, and a third image information;
detecting edges of the first image information, the second image information and the third image information, and then further detecting an overlapping region between the first image information and the second image information, and also detecting another overlapping region between the second image information and the third image information;
obtaining a characteristic value according to the overlapping regions;
performing a trimming/assembling operation upon the first image information, the second image information and the third image information according to the overlapping regions and the characteristic value; and
using a display module to display the assembled of the first image information, the second image information and the third image information.

9. The wide view monitoring method of claim 8, further comprising:
an image decoding unit, for determining whether or not to perform an optimization operation upon the first image information, the second image information and the third image information and also for determining whether or not to adjust the image quality and file size of the first image information, the second image information and the third image information.

10. The wide view monitoring method of claim 8, wherein the first image information is generated by a first image capturing module; the second image information is generated by a second image capturing module; and the third image information is generated by a third image capturing module.

11. The wide view monitoring method of claim 8, wherein the trimming/assembling operation is performed upon the first image information and the second image information by an image decoding unit according to the overlapping region between the first image information and the second image information; and the trimming/assembling operation is also performed upon the second image information and the third image information by the image decoding unit according to the overlapping region between the second image information and the third image information.

12. The wide view monitoring method of claim 8, wherein an image processing unit is enabled to perform a coding operation upon the first image information and the second image information according to an outcome equation; and a memory unit is enabled to stored the coded first image information, the coded second image information and the coded third image information.

13. The wide view monitoring method of claim 8, wherein an image coding unit is enabled to perform a compress operation upon the coded first image information, the coded second image information and the coded third image information.

14. The wide view monitoring method of claim 8, wherein a first displaying unit is enabled to display the first image information; a second displaying unit is enabled to display the second image information; and a third displaying unit is enabled to display the third image information.

## Amended claims

### Amended claims in accordance with Rule 137(2) EPC.

1. A wide view monitoring system, comprising:
a first image capturing module (11);
a second image capturing module (12);
a third image capturing module (13);
an image module, connected to the first image capturing module (11), the second image capturing module (12) and the third image capturing module (13); and
a display module (16);
wherein, the first image capturing module (11) generates a first image information; the second image capturing module (12) generates a second image information; the third image capturing module (13) generates a third image information; the first image information, the second image information and the third image information are trimmed and assembled by the image module; the assembled images of the first image information, the second image information and the third image information are displayed by the display module (16),
**characterized in that**
the display module further comprises:
a first displaying unit (160), for displaying the first image information;
a second displaying unit (161), for displaying the second image information;
and a third displaying unit (162), for displaying the third image information.

2. The wide view monitoring system of claim 1, further comprising:
a supporting rack (10, 10A), formed with a first setting position (100, 100A), a second setting position (101, 101A), a third setting position (102, 102A), a first bending angle (*θ*1, *θ*3) and a second bending angle (*θ*2, *θ*4) in a manner that the first bending angle (*θ*1, *θ*3) is formed at a position between the first setting position (100, 100A) and the second setting position (101, 101A) for enabling the first setting position (100, 100A) to incline or bend from the second setting position (101, 101A); the second bending angle (*θ*2, *θ*4) is formed at a position between the third setting position (102, 102A) and the second setting position (101, 101A) for enabling the third setting position (102, 102A) to incline or bend from the second setting position (101, 101A); the first image capturing module (11) is disposed at the first setting position (100, 100A); the second image capturing module (12) is disposed at the second setting position (101, 101A); and the third image capturing module (13) is disposed at the third setting position (102, 102A).

3. The wide view monitoring system of claim 2, further comprising:
a protective shield (14), formed with a window while being disposed covering the supporting rack (10, 10A), the first image capturing module (11), the second image capturing module (12) and the third image capturing module (13).

4. The wide view monitoring system of claim 2, wherein each of the first bending angle (*θ*1, *θ*3) and the second bending angle (*θ*2, *θ*4) is an angle ranged between 35 degrees and 48 degrees.

5. The wide view monitoring system of claim 1, wherein the image module further comprises:
an image decoding unit (150), for detecting edges of the first image information, the second image information and the third image information,
and then further detecting an overlapping region between the first image information and the second image information, while also detecting another overlapping region between the second image information and the third image information, and thereafter, according to the overlapping regions,
enabling the image decoding unit to perform a trimming/assembling operation upon the first image information, the second image information and the third image information for obtaining an assembled image information to be used for generating an outcome equation;
an image processing unit (151), for performing a coding operation upon the first image information, the second image information and the third image information basing on the outcome equation; and
an image compressing unit (152), for performing a compress operation upon the coded of the first image information, the second image information and the third image information.

6. The wide view monitoring system of claim 5, wherein the image module further comprise:
a memory unit (153), for storing the coded of the first image information, the second image information and the third image information.

7. A wide view monitoring method, comprising the steps of:
providing a first image information, a second image information, and a third image information;
detecting edges of the first image information, the second image information and the third image information, and then further detecting an overlapping region between the first image information and the second image information, and also detecting another overlapping region between the second image information and the third image information;
performing a trimming/assembling operation upon the first image information, the second image information and the third image information according to the overlapping regions; and
using a display module (16) to display the assembled of the first image information, the second image information and the third image information,
**characterized in that**
a first displaying unit (160) is enabled to display the first image information; a second displaying unit (161) is enabled to display the second image information; and a third displaying unit (162) is enabled to display the third image information.

8. The wide view monitoring method of claim 7, further comprising:
an image decoding unit (150), for determining whether or not to perform an optimization operation upon the first image information, the second image information and the third image information and also for determining whether or not to adjust the image quality and file size of the first image information, the second image information and the third image information.

9. The wide view monitoring method of claim 7, wherein the first image information is generated by a first image capturing module (11); the second image information is generated by a second image capturing module (12); and the third image information is generated by a third image capturing module (13).

10. The wide view monitoring method of claim 7, wherein the trimming/assembling operation is performed upon the first image information and the second image information by an image decoding unit (150) according to the overlapping region between the first image information and the second image information; and the trimming/assembling operation is also performed upon the second image information and the third image information by the image decoding unit (150) according to the overlapping region between the second image information and the third image information.

11. The wide view monitoring method of claim 7, wherein an image processing unit (151) is enabled to perform a coding operation upon the first image information and the second image information according to an outcome equation; and a memory unit (153) is enabled to stored the coded first image information, the coded second image information and the coded third image information.

12. The wide view monitoring method of claim 7, wherein an image compressing unit (152) is enabled to perform a compress operation upon the coded first image information, the coded second image information and the coded third image information.
